# EUROPEAN PATENT SPECIFICATION

(11) **EP 0 411 358 B1**
(45) Date of publication and mention of the grant of the patent: **29.09.1993**
(21) Application number: 90113277.9
(22) Date of filing: 11.07.1990
(51) Int. Cl.: B60V 1/08

(54) **Ground-surface-effect wing plane**
Bodeneffekt-Fluggerät
Véhicule à coussin d'air ou à effet de sol

(30) Priority: 31.07.1989 JP 196507/89; 31.01.1990 JP 21206/90
(43) Date of publication of application: 06.02.1991
(73) Proprietor: MITSUBISHI JUKOGYO KABUSHIKI KAISHA, Tokyo (JP)
(72) Inventor: Matsuoka, Toshio, c/o Kobe Shipyard & Engine Works, 1-chome, Hyogo-ku, Kobe-shi, Hyogo-ken (JP); Higashida, Akio, c/o Kobe Shipyard & Engine Works, 1-chome, Hyogo-ku, Kobe-shi, Hyogo-ken (JP); Satake, Tokuki, c/o Kobe Shipyard & Engine Works, 1-chome, Hyogo-ku, Kobe-shi, Hyogo-ken (JP)
(74) Representative: Henkel, Feiler, Hänzel & Partner

(56) References cited:
- DE-A- 2 606 405
- DE-A- 3 522 146
- DE-B- 2 205 952
- DE-B- 2 547 945
- PH-Y-SI CAL RE

## Description

### BACKGROUND OF THE INVENTION:

### Field of the Invention:

The present invention relates to a ground-surface-effect wing craft having an intermediate capability between a ship and an aeroplane and capable of gliding above a water surface or a ground surface.

### Description of the Prior Art:

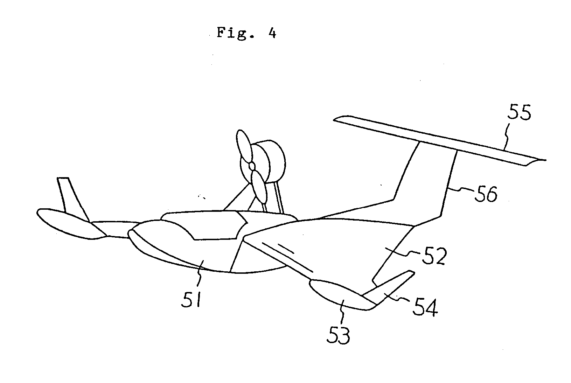

Representative one of the ground-surface-effect wing crafts in the prior art is illustrated in Fig. 4.

The ground-surface-effect wing craft is contemplated, as is generally known, such that it is made to fly closely to the water surface or the ground surface to bring about the condition where a pressure of an airflow along the lower surface of a wing is raised by the ground-surface-effect caused by approach to the ground surface, and to thereby increase a lift.

As shown in Fig. 4, the ground-surface-effect wing craft in the prior art had a configuration similar to an aeroplane in its general shape, in which a main body 51 is formed as a fuselage, a wing 52 is formed as a main wing, and the craft has conventional horizontal 55 and vertical 56 tail surfaces. Such a ground-surface-effect wing craft is known from the document DE-B2-2 547 945.

In order to enhance the ground-surface-effect, for a given main body 51, a Lippisch wing is employed as the wing 52, and at the ends of the wings are equipped floats 53 and V-shaped direction-stabilizer plates 54, the area of the wing being enlarged as compared to the conventional aeroplane.

Consequently, in contrast to the fact that generally a floatable speed is said to be about 100 km/hr in the case of a light craft such as Cessna craft, it can be reduced to 50 - 60 km/hr in the case of the subject craft.

However, the above-described ground-surface-effect wing craft in the prior art involved the following problems to be resolved.

That is, the above-mentioned type of ground-surface-effect wing craft in the prior art had disadvantages that it is hard to turn because upon banking the float 53 would come into contact with the water and also its lateral stability is poor.

Furthermore, regarding the ground-surface-effect per se of the ground-surface-effect wing craft, the clearance between the wing and the ground is about 1/10 x chord length (wing span), and if the left and right wings are subjected to waves in an irregular manner when the craft glides, for instance, above the water surface, then a possibility of breaking balance is very high.

Especially, there is a problem that a water wave drag, a water wave impact or the like action upon the floats 53 provided at the opposite ends of the wing 52 would influence take-off from the water surface and alighting on the water surface.

### SUMMARY OF THE INVENTION:

It is therefore one object of the present invention to provide a ground-surface-effect wing craft which is easy to turn and stable upon gliding, and which can enter ram wing gliding more safely and more quickly than the ground-surface-effect wing crafts in the prior art.

According to one feature of the present invention, there is provided a ground-surface-effect wing craft, comprising a main body having an aerofoil shape, end plates provided nearly vertically at the opposite lateral ends of the main body for preventing air from flowing outwards from the underside of the main body, end plate floats provided at the end plates, a float provided at a central lower portion of the main body, an operator's seat provided on the float, vertical and horizontal tail surface provided at a rear portion of the main body, and propelling means for lifting and propelling the ground-surface-effect wing craft by making use of a ground-surface-effect generated between the main body and a flat surface such as a water surface or a ground surface.

According to the present invention, owing to the above-described structural feature, the following advantages are obtained.

That is, under the condition where the airflow under the aerofoil-shaped main body forms two flows as separated laterally by the float at the center and the end plates, in response to the banking phenomena that upon rightward turning of the airframe after take-off, the starboard side of the main body approaches the water surface but the port side becomes high from the water surface, since the ground-surface-effect reveals itself depending upon the height from the water surface, a larger lift is exerted upon the starboard side than the port side, hence the effect serves as a restoring force, and therefore, there occurs turning under a laterally sliding condition and thus the fear of the end plate coming into contact with the water surface is mitigated. With regard to the effect upon leftward turning, the phenomena would occur symmetrically to the above-mentioned. With respect to lateral stabilization, in response to descent of the right side (ascent of the left side) a restoring force acts upon the starboard side due to the ground-surface-effect, the attitude is corrected in the direction of achieving horizontal stabilization, and it tends to return to the horizontal condition. In response to descent of the left side, the phenomena would occur symmetrically to the above-mentioned.

In addition, as a result of mounting of the end plate floats to the end plates, while they do not act to generate an underwater drag under a static condition because the end plate floats are not submerged under the water surface, in response to rolling, since the end plate float on the starboard side are submerged in the water in correspondence to the rolling angle (tilting angle) in the case of tilting to the starboard side, the weight of water of the submerged volume acts as a buoyancy for the float, thus raises the starboard side of the main body and corrects the tilting angle. The height of the end plates is determined so as to supplement a lift coefficient upon take-off from the water surface.

The fact that under a normal condition the floats of the end plates are not submerged in the water is effective for reducing an underwater drag. In addition, in response to laterally irregular alighting on the water, since a buoyancy is generated in corresponding to a submerged volume of the end plate float, a restoring force is produced, and the airframe tends to restore to a horizontal stable condition.

It is to be noted that the main body generally has an aerofoil shape, if it is propelled by the propelling means, the craft is lifted and propelled by a lift generated due to the aerofoil shape and an aerodynamic force of air filled under the main body due to the end plates and the main body.

The above-mentioned and other objects, features and advantages of the present invention will become more apparent by reference to the following description of one preferred embodiment of the invention taken in conjunction with the accompanying drawings.

### BRIEF DESCRIPTION OF THE DRAWINGS:

In the accompanying drawings:
Figs. 1 through 3 illustrate a ground-surface-effect wing craft according to one preferred embodiment of the present invention, Fig. 1 being a schematic front view thereof, Fig. 2 being a schematic side view thereof, and Fig. 3 being a schematic plan view thereof; and
Fig. 4 is a perspective view of a ground-surface-effect wing craft in the prior art.

### DESCRIPTION OF THE PREFERRED EMBODIMENT:

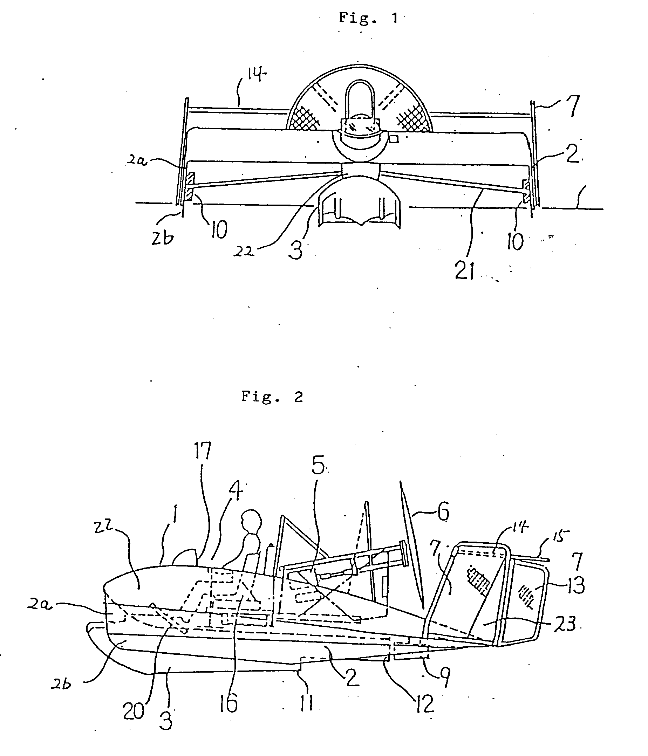

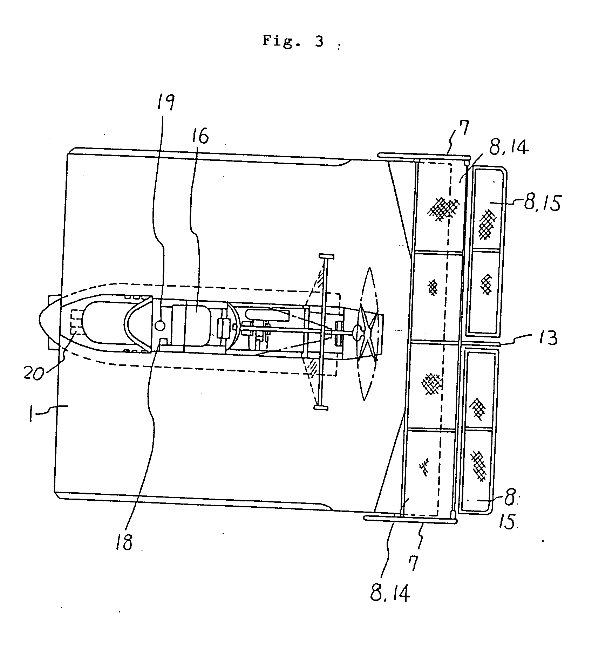

Now one preferred embodiment of the present invention will be described with reference to Figs. 1 to 3.

At first, generally describing the overall construction, in these figures, reference numeral 1 designates a main body generally formed in an aerofoil shape, which constitutes a main wing. This main body 1 is equipped with a cockpit 4 at a central portion, a float 3 at the bottom of an airframe, end plates 2 at its opposite ends for preventing air under the main body 1 from escaping outwards, and a propelling engine 5, a propeller 6, a vertical tail 7 and a horizontal tail 8 at a rear portion.

Next, details of the preferred embodiment will be described.

The main body has a unitary aerofoil shape adapted to generate a lift for take-off, and its shape and area are determined on the basis of a take-off speed, a weight of the craft and a lift coefficient. As a principal material of the portion forming the aerofoil shape of the main body 1, carbon FRP that is light in weight and subjected to waterproofing, is used, and the molded shape is an integral shape (a monocoque shape).

Reference numeral 2 designates end plates hanging from the opposite ends of the main wing forming the main body 1 up to the water surface or the ground surface. It is molded of the same material as the main body 1 into an integral shape with the main body 1. These end plates 2 are provided in order that upon navigation, air flowing from the forth of the main body 1 to the underside of the main wing may not be allowed to escape sideways, and thereby the air flow flows out from the rear of the main wing. The lower surfaces (lower edges) of the end plates 2 are made to be flush with (or positioned a little above) a plane connecting a corner edge of a front step 11 as will be described later and a corner edge of a rear step 12 as will be described later, to make use of the ground-surface-effect to a maximum extent. Also, attention is paid so that the lower surfaces of the end plates 2 may not protrude to the lower side of the aforementioned plane for the purpose of not increasing an underwater drag. It is to be noted that the end plate 2 is constructed of a thick plate portion 2a and a thin plate portion 2b.

Reference numeral 3 designates a float provided at the bottom of the main body 1, and it is a float capable of generating a buoyancy compatible to a total weight of the main body 1. It is preferable to design the float 3 so that its total volume may generate a buoyancy about three times as large as the total weight of the main body 1. The front portion of the float 3 is formed in a chine shape similarly to a bow of normal ships, and the bottom surface is formed in such shape that an underwater drag such as a frictional resistance, a wave making resistance or the like may be minimized. Upon alighting on the water surface after take-off of the main body 1, the front step 11 and the rear step 12 formed on the float 3 would separately come into contact with the water, and thereby impact against the water surface can be mitigated. The material of the float 3 is foamed styrol having its surface reinforced by carbon FRP in order to achieve lightweight construction. In addition, the float 3 could be formed integrally with a cabin 22.

Reference numeral 4 designates a cockpit provided at a central portion of the main body 1. This cockpit 4 is provided either by forming the cabin 22 integrally with the main body 1, or by forming the cabin 22 with the main body 1 and the float 3. The cockpit 4 consists of a seat 16 for an operator, an engine start/stop switch, an engine tachometer, an atmospheric speed meter, a water temperature meter, and the like. Besides, a meter panel 17, an engine throttle lever 18, an elevator control stick 19, a pedal 20 for controlling a rudder and an underwater rudder and the like are equipped.

Reference numeral 5 designates a propelling engine mounted to a rear portion of the main body 1. This propelling engine 5 is mounted to the main body 1 via an engine frame and it serves as a propelling power source for the main body 1. It drives a propeller 6 via a pulley by means of a driving shaft not specifically referred to. This propelling engine 5 is installed in an upsidedown attitude in order to set a center of gravity of the airframe low.

Reference numeral 6 designates a propeller which is driven by the propelling engine 5 via a pulley, and it generates a thrust. The propeller 6 is a variable-pitch propeller having four blades. The propeller pitch is adjusted so as to match with an engine power. A reaction torque generated by the propeller 6 is regulated by giving a difference between the areas of the left and right parts of an elevator 15 of a horizontal tail 8 provided at a rear portion of the main body 1, or by giving an offset to an angle of attack upon balancing. Regulation by means of a balance weight is not favorable because a total weight increases.

Reference numeral 7 designates a vertical tail surface provided at a rear portion of the main body 1. The vertical tail surface 7 consists of fixed portions and a movable portion. The fixed portions are provided one on each of the opposite sides of the rear portion of the main body 1. The movable portion is provided one at the center of the rear portion of the main body 1 and forms a rudder 13. The fixed portions of the vertical tail surface 7 serve to realize stability in a straight traveling property of the craft, and in order to reduce resistance upon turning, a cut-away portion 23 is provided for appropriately adjusting its area by cutting away at least 1/4 - 1/3 of the vertical tail frame of the fixed portion, and the remainder is formed of cloth or plate such as polyester to form a vertical tail area of the fixed portion. If the cut-away portion 23 is 1/4 or less, the craft would be largely influenced by side wind and resistance upon turning would become large. Also, if the cut-away portion 23 is 1/3 or more, then a straight traveling property of the craft would become unstable. The rudder 13 at the movable portion is linked with an underwater rudder 9 and serves as a steering member. For the vertical tail surface 7, cloth such as polyester fibers is woven on a framework of aluminium pipes, and thereby realization of lightweight construction is achieved.

Reference numeral 8 designates a horizontal tail surface provided at a rear portion of the main body 1. The horizontal tail surface 8 is composed of a stabilizer 14 and an elevator 15. The structure of the horizontal tail surface 8 is constructed by similar materials and working methods to the vertical tail surface 7. The stabilizer 14 is of semi-fixed type, and has such structure that an angle of attack can be preset. Longitudinal stabilization of an airframe is effected by presetting of the angle of attack of this stabilizer 14 and manipulation of the elevator 15. For instance, the angle of attack of the stabilizer 14 is semi-fixed in the ranges of 10 - 15 degrees respectively above and under based on the height of the center of the propeller 6, and a minimum adjustable angle is made to be 1.5 - 3.0 degrees. That is, an attack angle adjusting ruler having 10 - 20 point holes is provided on a fixed portion vertical tail frame of the vertical tail surface 7. A structure of the elevator 15 is such that its attack angle can be adjusted in the ranges of 15 - 20 degrees respectively above and under. In this way, the attack angles of the stabilizer 14 and the elevator 15 are made individually adjustable.

The above-described attack angles are preferable angles obtained as a result of experiments, and if the attack angles become too large, in the case of navigation, the plane body would be subjected to abrupt variations, rise and fall of a nose would become large, and so, it is unfavorable. However, if the attack angles are too small, variation of the craft body is gradual, and so, control of the craft body would be difficult and a run-up distance would become long.

Reference numeral 9 designates an underwater rudder provided at the rear side of the float 3 and mounted to the bottom of the main body 1. The underwater rudder 9 is operated as linked with the rudder 13 via a push-pull wire by a rudder and underwater rudder control pedal 20 at the operator's seat 4. The underwater rudder 9 is adjustable in vertical positions along a support rod in correspondence to a trim angle of the main body 1. A submerged depth of the underwater rudder 9 when the craft is stationary on the water, is adjusted so that an underwater drag upon take-off from the water may be minimized and upon flying the underwater rudder 9 may not come into contact with the water. The material of the underwater rudder 9 is aluminium material.

Reference numeral 10 designates end plate floats mounted to the end plates 2. The end plate floats 10 are provided for the purpose of enhancing longitudinal stability and lateral stability of the main body 1. In other words, a buoyancy is generated according to a submerged volume of the end plate floats 10, this buoyancy serves as a restoring force, and it tends to restore the main body 1 to the original stable condition. Explaining the case where the craft turns to the right on the water surface, the main body 1 tilts to the starboard side, hence the end plate 10 on the starboard side will submerge in the water, a buoyancy will be generated in correspondence to the submerged volume, and it serves as a restoring force and acts to restore the starboard to the original state. This results in enhancement of lateral stability. With respect to longitudinal stability also, a similar effect is obtained. The material of the end plate float 10 is similar to that of the float 3. The height of the mount position of the end plate float 10 to the end plate 2 is made higher than a still water draught line, and it is preferable to mount it about 10 - 20 m/m above the draught line. Thereby, an underwater drag caused by the end plate float 10 upon navigation on the water surface can be reduced.

Reference numeral 11 designates a front step provided at a central portion of the bottom surface of the float 3. This facilitates cutting of water during the period when the main body 1 starts from the state held in contact with the water and finishes take-off from the water, and thereby reduces an underwater drag. The front step 11 is designed so as to support a center of gravity of the main body, and the cutting depth of the front step 11 is preferably 10% or less of the width of the float 3. For instance, if the width of the float 3 is 800 m/m, then the cutting depth of the step is preferably 80 m/m or less.

Reference numeral 12 designates a cut-off at a rear portion of the bottom surface of the float 3, that is, a rear step. A plane connecting a corner edge of the front step 11 and a corner edge of the rear step 12 becomes a contact plane with the water surface upon float-up, and an angle formed between a reference plane of the main wing of the main body 1 and said plane connecting the corner edges of the steps 11, 12 becomes an angle of attack of the main body 1 upon take-off from the water. Preferably the rear step 12 is separated from the underwater rudder 9 by 300 m/m or more, but when the interval therebetween is small, a tunnel-shaped notch serving as a water-flow passageway is provided at a central portion of the rear step 12.

Reference numeral 13 designates a rudder forming a vertical tail surface 7. The rudder 13 is operated as linked with the underwater rudder 9. The construction is such that for turning of the main body 1, the underwater rudder 9 achieves a principal effect upon navigation on the water surface, but when a speed rises and an airflow behind a propeller becomes active, or when the main body floats up, the draught becomes shallow and the effect of the underwater rudder 9 becomes weak, the rudder 13 achieves a principal effect.

Reference numeral 14 designates a stabilizer forming a horizontal tail surface 8. It is mounted horizontally at an upper portion of the vertical tail surface 7 and in front of an elevator 15, and in order to effectively utilize a rear airflow of the propeller 6 as a PAR (Power Argumented Ramwing), it is desirable to make the height of the stabilizer 14 nearly coincide with the height of the center of the propeller 6. The interval between the front edge of the stabilizer 14 and the propeller 6 is preferably about 100 m/m in view of facility of dismounting and maintenance of the propeller 6. If they are separated too far, the PAR effect becomes weak. Since the angle of attack of the stabilizer 14 can be preset, it is adjusted while observing a navigation condition so that stability can be established in the longitudinal direction.

Reference numeral 15 designates an elevator forming the horizontal tail surface 8. The elevator 15 is constructed of respective ones on the left and on the right, and it is used for aileron operations upon nose-up, nosed-down and turning of the main body 1. After longitudinal stabilization of the main body 1 has been adjusted by the stabilizer 14, if the elevator 15 is operated downwards, then nose-down would occur, while if it is operated upwards, then nose-up would occur. If the elevator 15 is operated upwards on the right side and operated downwards on the left side, then an aileron operation would occur. If it is operated downwards on the right side and operated upwards on the left side, then likewise an aileron operation would occur. In order to reduce a reaction torque of the propeller 6, the areas of the left and right sections of the elevator 15 are made different, or the mount angles thereof under a balanced condition are made to have an offset.

Reference numeral 16 designates an operator's seat. The seat 16 has a structure movable by about 100 m/m in the back and forth directions, and this is for the purpose of finely adjusting the position of a center of gravity and matching with the operator's attitude.

Reference numeral 17 designates a meter panel consisting of an engine start/stop switch, an engine tachometer, an atmospheric speed meter, a water temperature meter, and the like for operating the main body 1.

Reference numeral 18 designates a throttle lever for controlling an engine, which is provided on the port side of the cockpit 4. The throttle lever 18 is connected to a valve in a carburettor via a push-pull wire not shown, an opening angle of the valve in the carburettor is adjusted by operations of the throttle lever 18, and while monitoring the engine tachometer, the rotational speed of the engine is set at a predetermined value.

Reference numeral 19 designates a stick lever for controlling the elevator, which is provided at the center of the driver's seat 16 in the cockpit 4. If the stick lever 19 is pulled towards the operator, it becomes an elevator-up operation and nose-up of the main body 1 becomes possible, while if the stick lever 19 is pushed forth, it becomes an elevator-down operation and nose-down becomes possible. If the stick lever 19 is operated leftwards or rightwards, the elevator 15 is subjected to aileron operations.

Reference numeral 20 designates a pedal for controlling the rudder 13 and the underwater rudder, which is present in front of the operator's seat 16. The pedal 20 consists of respective ones for right foot use and for left foot use as connected with each other, and upon turning to the left, if the right foot pedal is trampled forth, then the left foot pedal is moved towards the operator, and the rudder 13 and the underwater rudder 9 are jointly operated. Upon turning to the right, if the left foot pedal is trampled forth, similar operations would occur.

Reference numeral 21 designates end plate support rods for reinforcing the end plates 2. The end plate support rods 21 are provided so as to counteract against the stress of the end plates 2 exerted by a lateral wind and lateral waves or upon turning. Preferably the end plate support rods 21 should have a configuration for which an air resistance becomes minimum.

Next, one example of a method of operation of the illustrated embodiment will be explained sequentially for the respective items, in the following:
(1) Before alighting on the water, the following items are confirmed:
   1-1 It is confirmed that a thrust of the propeller 6 has a prescribed value.
   1-2 It is confirmed that the position of a center of gravity is the proximity of the front step 11. It is desirable that the position of a center of gravity is present 100 - 200 m/m in front of the aerodynamic center.
   1-3 It is confirmed that instruments in the respective operation systems can operate normally.
   1-4 It is confirmed that the angle of attack of the main wing is a prescribed angle (for instance, 6 degrees).
   1-5 It is confirmed that the angle of attack of the stabilizer 14 is a prescribed angle (for instance 4 degrees).
(2) In an alighting test, the following items are confirmed:
   2-1 It is confirmed that a trim angle (for instance, 3 degrees) of the main body 1 has a prescribed value. The seat 16 is moved back and forth, and fine adjustment is effected.
   2-2 It is confirmed that the end plate floats 10 are not held in contact with water.
   2-3 It is confirmed that the rearmost portion of the main body 1 is about 100 m/m apart from the water surface.
   2-4 An operator gets on the cockpit 4 and confirms restoring forces at the forth, at the rear, on the left and on the right of the main body 1. It is confirmed that the end plate floats 10 are fully functioning.
(3) The engine is started, and at a low speed nearly equal to an idling speed, the following items are confirmed:
   3-1 Lateral stability during straightly advancing navigation is confirmed.
   3-2 A turning radius is confirmed. Right turn and left turn are carried out and functions of the rudder 13 and the underwater rudder 9 are confirmed, and also lateral stability is confirmed.
   3-3 Up-down functions an aileron functions of the elevator 15 during navigation are confirmed. Operations of the elevator 15 is effected, and feeling of the nose-up and the nose-down is grasped.

When fine adjustment has been finished through the aforementioned confirmation works, it is desirable that while holding the elevator 15, a speed is successively raised to reach hump, water-contact, take-off from the water, and navigation.

During navigation on the water surface, nose-up is effected by elevator-up, a trim angle is selected sufficiently large, and thereby take-off from the water can be made early. It is also possible that during gliding, nose-down is effected by elevator-down and the height of take-off from the water is held. If the speed is reduced from the gliding condition, the main body 1 would alight on the water quietly and would continue navigation on the water surface. When the operation has been finished, the engine is stopped.

As described in detail above, according to the illustrated embodiment of the present invention, owing to the fact that end plates are additionally provided at the both left and right ends of an aerofoil-shaped main body and flow-out of air to the outside is prevented, there is an advantage that in response to banking of an airframe, the ground-surface-effect on the tilted side would be further enhanced, a restoring force on the tilted side is increased, and so the inconvenience that the end plate and the end plate float on the same side come into contact with water, would not be produced.

In addition, there is an advantage that since end plate floats are provided on the end plates, if the airframe should tilt due to, for example, rolling or the like, then the end plate float on the corresponding side would be deeply submerged in water and a corresponding strong restoring force would be generated, and so, the tilt is immediately corrected and thus lateral stability is improved.

Since the present invention has the above-described structural feature, it has the following effects and advantages:

That is, as the main body floats up from the water surface by making use of the ground-surface-effect and thereafter enters into gliding, an underwater drag during gliding is not present but only an aerodynamic drag is present, and therefore, traveling with relatively small power becomes possible. In other words, as compared to the ground-surface-effect wing crafts in the prior art, the craft according to the present invention can reach ram wing gliding safely and quickly. In addition, upon turning, since the inconvenience that the end plate or the like on the side of banking may come into contact with the water, is eliminated, easiness of turning and stability upon gliding are increased, and a ground-surface-effect wing craft having high degree of usefulness can be provided.

While a principle of the present invention has been described above in connection to one preferred embodiment of the invention, it is intended that this shall be interpreted to be illustrative and not as a limitation to the scope of the invention as defined by the appended claims.

## Claims

1. A ground-surface-effect wing craft comprising a main body (1) having an aerofoil shape, end plates (2) provided nearly vertically at the opposite lateral ends of said main body for preventing air from flowing outwards from the underside of the main body, end plate floats (10) provided at said end plates, a float (3) provided at a central lower portion of said main body, an operator's seat (16) provided on said float, vertical (7) and horizontal (8) tail surfaces provided at a rear portion of said main body, and propelling means (5,6) for lifting and propelling the ground-surface-effect wing craft by making use of a ground-surface-effect generated between said main body and a flat surface such as a water surface or a ground surface.

2. A ground-surface-effect wing craft as claimed in Claim 1, wherein an underwater rudder (9) operating as linked with a rudder (13) disposed in the vertical tail (7) is provided.

3. A ground-surface-effect wing craft as claimed in Claim 1, wherein the horizontal tail surface (8) is composed of a stabilizer (14) and an elevator (15), and said stabilizer is disposed at the position adapted to receive a downstream flow of the prepelling means.

4. A ground-surface-effect wing craft as claimed in Claim 1, wherein the end plate floats are disposed above a water line.

5. A ground-surface-effect wing craft as claimed in Claim 1, wherein at a central portion of the bottom surface of the float (3) an upward step (11) is provided.

6. A ground-surface-effect wing craft as claimed in Claim 5, wherein at a rear portion of the bottom surface of the float (3) a further upward step (12) is provided.

7. A ground-surface-effect wing craft as claimed in Claim 6, wherein the lower surfaces of the end plates are made to be flush with a plane connecting the corner edges of said two steps of the bottom surface of the float or disposed a little above said plane.

8. A ground-surface-effect wing craft as claimed in Claim 1, wherein a cabin (22) is formed integrally by the main body (1) and the float (3).

## Patentansprüche

1. Bodeneffekt-Fluggerät mit einem Hauptkörper (1) einer strömugnsgünstigen Form oder Tragflächenform, nahezu lotrecht an den gegenüberliegenden Querenden des Hauptkörpers angeordneten Endscheiben (2) zur Verhinderung einer Luftströmung von der Unterseite des Hauptkörpers nach außen, an den Endscheiben vorgesehenen Endscheiben-Schwimmern (10), einem am mittleren unteren Abschnitt des Hauptkörpers vorgesehenen Schwimmer (3), einem auf dem Schwimmer vorgesehenen Führersitz (16), am hinteren Abschnitt des Hauptkörpers vorgesehenen lotrechten (7) und waagerechten (8) Leitflächen sowie einer Vortriebseinrichtung (5, 6) für Auftrieb und Vortrieb des Bodeneffekt-Fluggeräts unter Ausnutzung eines zwischen dem Hauptkörper und einer flachen Fläche, wie einer Wasser- oder Bodenoberfläche, erzeugten Bodeneffekts.

2. Bodeneffekt-Fluggerät nach Anspruch 1, dadurch gekennzeichnet, daß ein mit einem in der lotrechten Leitfläche (7) angeordneten Ruder (13) gekoppelt betätigbares Unterwasserruder (9) vorgesehen ist.

3. Bodeneffekt-Fluggerät nach Anspruch 1, dadurch gekennzeichnet, daß die waagerechte Leitfläche (8) aus einer Dämpfungsflosse (14) und einem Höhenruder (15) gebildet ist und daß die Dämpfungsflosse in einer Stellung angeordnet ist, in welcher sie einen Abstrom von der Vortriebseinrichtung abzunehmen vermag.

4. Bodeneffekt-Fluggerät nach Anspruch 1, dadurch gekennzeichnet, daß die Endscheiben-Schwimmer oberhalb einer Wasserlinie angeordnet sind.

5. Bodeneffekt-Fluggerät nach Anspruch 1, dadurch gekennzeichnet, daß an einem zentralen Abschnitt der Unterseite des Schwimmers (3) eine Aufwärtsstufe (11) vorgesehen ist.

6. Bodeneffekt-Fluggerät nach Anspruch 5, dadurch gekennzeichnet, daß an einem hinteren Abschnitt der Unterseite des Schwimmers (3) ferner eine Aufwärtsstufe (12) vorgesehen ist.

7. Bodeneffekt-Fluggerät nach Anspruch 6, dadurch gekennzeichnet, daß die Unterseiten der Endscheiben mit einer die Eckkanten der beiden Stufen der Unterseite des Schwimmers verbindenden Ebene bündig abschließend oder etwas oberhalb dieser Ebene liegend angeordnet sind.

8. Bodeneffekt-Fluggerät nach Anspruch 1, dadurch gekennzeichnet, daß durch den Hauptkörper (1) und den Schwimmer (3) eine Kabine (22) einheitlich gebildet ist.

## Revendications

1. Un véhicule à aile à effet de sol, comportant un corps principal (1) présentant une forme aérosustentatrice, des plaques extrêmes (2) prévues sensiblement verticalement aux extrémités latérales opposées dudit corps principal pour empêcher à l'air de circuler vers l'extérieur à partir de la face inférieure du corps principal, des flotteurs extrêmes (10) en plaque prévus sur lesdites plaques extrêmes, un flotteur (3) prévu à la partie centrale inférieure dudit corps principal, un siège d'opérateur (16)prévu sur ledit flotteur, des surfaces de queue verticale (7) et horizontale (8) prévues à la partie arrière dudit corps principal, et des moyens de propulsion (5,6) pour élever et propulser le véhicule à aile à effet de sol en utilisant un effet de sol engendré entre ledit corps principal et une surface plane telle qu'une surface d'eau ou une surface de sol.

2. Un véhicule à aile à effet de sol tel que revendiqué dans la revendication 1, dans lequel est prévu un gouvernail sous-marin (9) agissant en étant couplé par embiellage avec un gouvernail (13) disposé dans la queue verticale (7).

3. Un véhicule à aile à effet de sol tel que revendiqué dans la revendication 1, dans lequel la surface de queue horizontale (8) est composée d'un stabilisateur (14) et d'un élévateur(15),et ledit stabilisateur est disposé dans une position adaptée pour recevoir l'écoulement vers l'aval des moyens de propulsion.

4. Un véhicule à aile à effet de sol tel que revendiqué dans la revendication 1, dans lequel les flotteurs extrêmes en plaque sont disposés au-dessus d'une ligne d'eau.

5. Un véhicule à aile à effet de sol tel que revendiqué dans la revendication 1, dans lequel un redan (11) dirigé vers le haut est prévu dans une partie centrale de la surface inférieure du flotteur (3).

6. Un véhicule à aile à effet de sol tel que revendiqué dans la revendication 5, dans lequel un autre redan (12) dirigé vers le haut est prévu dans une partie arrière de la surface inférieure du flotteur (3).

7. Un véhicule à aile à effet de sol tel que revendiqué dans la revendication 6, dans lequel les surfaces inférieures des plaques extrêmes sont rendues de niveau avec un plan reliant les bords des angles desdits deux redans de la surface inférieure du flotteur ou disposées légèrement au-dessus dudit plan.

8. Un véhicule à aile à effet de sol tel que revendiqué dans la revendication 1, dans lequel une cabine (22) est formée d'une seule pièce par le corps principal (1) et le flotteur (3).
